(19) Europäisches Patentamt
European Patent Office
Office européen des brevets

(11)  **EP 1 703 970 B1**

(12)  **EUROPEAN PATENT SPECIFICATION**

(45) Date of publication and mention
of the grant of the patent:
**11.03.2009  Bulletin 2009/11**

(51) Int Cl.:
***B01J 19/00*** (2006.01)  ***B01D 3/08*** (2006.01)
***B01F 13/00*** (2006.01)

(21) Application number: **05701882.2**

(22) Date of filing: **17.01.2005**

(86) International application number:
**PCT/GB2005/000114**

(87) International publication number:
**WO 2005/068065 (28.07.2005 Gazette 2005/30)**

(54) **FLUID-CONTACTOR**

FLUIDKONTAKTOR

DISPOSITIF DE MISE EN CONTACT DE FLUIDES

(84) Designated Contracting States:
**AT BE BG CH CY CZ DE DK EE ES FI FR GB GR
HU IE IS IT LI LT LU MC NL PL PT RO SE SI SK TR**

(30) Priority: **17.01.2004  GB 0401045**

(43) Date of publication of application:
**27.09.2006  Bulletin 2006/39**

(73) Proprietor: **THE UNIVERSITY OF SHEFFIELD
Sheffield S10 2TN (GB)**

(72) Inventors:
• **ALLEN, Raymond, William, Kenneth
Oxford OX1 5DD (GB)**

• **MACINNES, Jordan, MacLeod
Sheffield S11 8RW (GB)**
• **PRIESTMAN, Geoffrey, Hugh
Sheffield S11 8RW (GB)**

(74) Representative: **Dauncey, Mark Peter et al
Marks & Clerk
Sussex House
83-85 Mosley Street
Manchester M2 3LG (GB)**

(56) References cited:
**WO-A-99/44736          US-A- 4 292 409
US-A- 4 731 159          US-A- 4 863 567
US-A1- 2004 252 584**

**Description**

The present invention relates generally to a fluid-contactor, and in particular to a fluid-contactor arranged to rotate about a predetermined axis. Embodiments of the invention are particularly suitable for, but not limited to, performing distillation and gas-liquid absorption on small scales.

Fluid-contactors are devices in which a fluid contact can be controllably performed. Fluid contact in this context includes separation processes, biological and chemical reactions, the mixing of substances including the dissolving of a substance in a liquid, and the forming of a suspension of a substance in a liquid.

Micro-channel fluid-contactors are fluid-contactors utilising channels of characteristic dimensions of the order of microns. In other words, the diameter or width of such channels is typically within the range 1μm to 100 μm, but may be up to several mm (e.g. 3mm). Using such small channels allows the construction of an inherently safe, extremely well defined process system. Micro-channel systems allow the routine engineering of precise chemistry, where almost all atoms are used efficiently, and byproduct wastes are minimised or avoided. Systems are currently being developed to perform complete chemical procedures involving fluid pumping, valves, chemical reactions and analysis all on one small device, in channels of hydraulic diameters between tens and hundreds of microns. The weakest part of such systems lies in the separation techniques available to separate the required products after the reaction has occurred, with no efficient technique based on relative volatilities yet available.

US 6,527,432 describes a micro-channel platform for achieving efficient mixing of a plurality of fluids on the surface of the platform, with fluid flow being motivated by centripetal force produced by rotation. A micro-channel is utilised to mix the two fluids, and extends in a zig zag fashion from the centre of a disk towards the disk periphery. The micro-channel is connected to an air ballast chamber. In operation, the first fluid is added to the micro-channel, and the disk rotated to drive the fluid down the channel to the radially-distal end of the micro-channel, with air being compressed into the air ballast chamber. Once rotation has stopped, the second fluid is introduced into the micro-channel, with the two fluids mixing due to the first fluid being pushed back up the channel by the restoring force exerted by the trapped air.

One disadvantage of such an apparatus is that mixing of the two fluids has to be performed in a number of discrete steps, with different fluids being added to the fluid-contactor at different stages of the process. Further, the speed of rotation of the fluid-contactor has to be varied at each stage. It is also difficult to make precise predictions of the total system behaviour as it is not a steady state process.

WO99/44736A discloses a fluid contactor comprising a substantially planar element wherein two charnels are inserted. Both channels are in the form of a spiral with their axes centred on the axis of the planar element. The fluid contactor further comprises inlet and outlet ports for introducing and recovering fluids to/from the fluid contactor. Fluids are caused to flow along each of the two spiral channels until they mix in a region in proximity of the axis of the planar element.

US4292409A, discloses a flow reactor for enzyme reactions incorporating a fixed spiral channel in which the enzyme is immobilised on to a matrix and a reaction solution introduced into and along the spiral channel.

US4863567A discloses a distillation apparatus incorporating a heat exchanger block including two intertwined spiral arrays, one of the spiral arrays being arranged for evaporisation and the other spiral array being arranged for condensation.

It is an aim of embodiments of the present invention to provide a fluid-contractor that substantially addresses one or more of the problems of the prior art, whether referred to therein or otherwise.

According to a first aspect, the present invention provides a fluid-contactor comprising an element arranged to rotate about a predetermined axis, the element comprising a channel extending generally in a spiral about said axis, the channel having a first aperture for the output of a first fluid, a second aperture distant from said axis for the output of a second fluid, and at least a third aperture for the input of a fluid to the channel and the fluid-contactor comprising a motor arranged to rotate the element at an angular velocity sufficient to move second fluid within said channel towards said second aperture.

By providing such a fluid-contactor, the first and second fluids may be moved in opposite directions along the channel, whilst the element (e.g. a platform) is rotated at a uniform speed. The fluid-contactor can be utilised to provide continuous separation or contacting operations (e.g. distillation and gas-liquid absorption), with a continuous single stream of the first fluid flowing counter-current to a continuous stream of the second fluid.

The first aperture may be adjacent said axis.

The channel may extend in a plane substantially perpendicular to said axis.

The element may be a disc, with said predetermined axis extending through the radial centre of the disc.

The channel angle may vary along the length of the channel.

The channel angle of at least one portion of said channel may vary such that the channel does not follow the path of a spiral.

The internal width of the channel may vary along the length of the channel.

At least a portion of the channel may be bifurcated, the third aperture for input of a fluid being located on one arm of the bifurcation, and either the first or second aperture for respective output of the first or second fluid being located on a second arm of the bifurcation.

One fluid may be a liquid and the other fluid may be a gas, a vapour, or an immiscible liquid.

In at least a portion of the channel, the wettability of an internal surface adjacent said predetermined axis may be different from the wettability of the facing internal surface on the opposite side of the channel.

The fluid contactor may further comprise a temperature control unit arranged to maintain at least a predetermined portion of said channel at a predetermined spatial temperature distribution.

The temperature control unit may comprise a heater arranged to heat a predetermined portion of said channel.

The fluid-contactor may be arranged to perform distillation of a fluid mixture, and the third aperture may be located along the channel between the first and second apertures, for input of the fluid mixture into the channel, said first and second fluids corresponding to respectively low boiling point and high boiling point fractions of said fluid mixture.

The fluid-contactor may be arranged for continuous counter-current contacting, and the third aperture may be located adjacent the second aperture, for input of the first fluid to the channel, the channel further comprising a fourth aperture adjacent the first aperture, for input of the second fluid to the channel.

The first aperture may be distant from said axis.

The fluid contactor may be arranged for continuous co-current contacting, and wherein the third aperture may be located adjacent said axis for the input of the first fluid to the channel, with the channel further comprising a fourth aperture adjacent the axis, for input of the second fluid to the channel.

At least one of said apertures may be connected to a fluid container via a co-axially extending tube.

According to a second aspect, the present invention provides a method of manufacturing a fluid-contactor comprising: providing an element arranged to rotate about a predetermined axis, creating a channel in said element extending generally in a spiral about said axis, the channel having at least a first aperture for the output of a first fluid, and at least a second aperture distant from said axis for the output of a second, more dense, fluid and a motor arranged to rotate the element at an angular velocity sufficient to move second fluid within said channel towards said second aperture.

According to a third aspect, the present invention provides a method of producing a substance which is obtained by a contacting process or a separating process comprising providing an element arranged to rotate about a predetermined axis, the element comprising a channel extending generally in a spiral about said axis, the channel having at least a first aperture for the output of a first fluid, and at least a second aperture distant from said axis for the output of a second, more dense, fluid, the method comprising rotating the element at an angular velocity sufficient to move second fluid within said channel towards said second aperture.

Embodiments of the present invention will now be described, by way of example, with reference to the accompanying drawings, in which:

Figures 1A and 1B are respectively a schematic plan view and a schematic cross-sectional side view of a fluid-contactor in accordance with a first embodiment;

Figures 2A and 2B are respectively a schematic plan view and a schematic cross sectional side view of a fluid-contactor in accordance with a second embodiment;

Figure 3 is a schematic cross-sectional view, indicating how one end of the channel may be bifurcated to provide separate input and output apertures;

Figure 4 is a schematic plan view of alternative channels, indicating how portions of the channel need not follow the path of a spiral;

Figure 5 shows a cross section of a channel of a fluid-contactor in accordance with a further embodiment of the present invention;

Figure 6A is a schematic plan view of a spiral channel of a fluid-contactor, indicating the geometrical factors utilised in a mathematical model of flow within the channel;

Figure 6B is a close-up of the area outlined by the rectangular box in Figure 6A;

Figure 7 is a graph illustrating predicted velocity profiles across the width of the spiral channel for two-phase flow, in which the liquid occupies 20% of the channel, for three different flow rate ratios q;

Figure 8 is a graph indicating the variation in a pressure gradient parameter with the liquid layer fraction for three different flow rate ratios; and

Figure 9 is a graph indicating the variation of the vapour flow rate with liquid layer fraction for three different flow rate ratios.

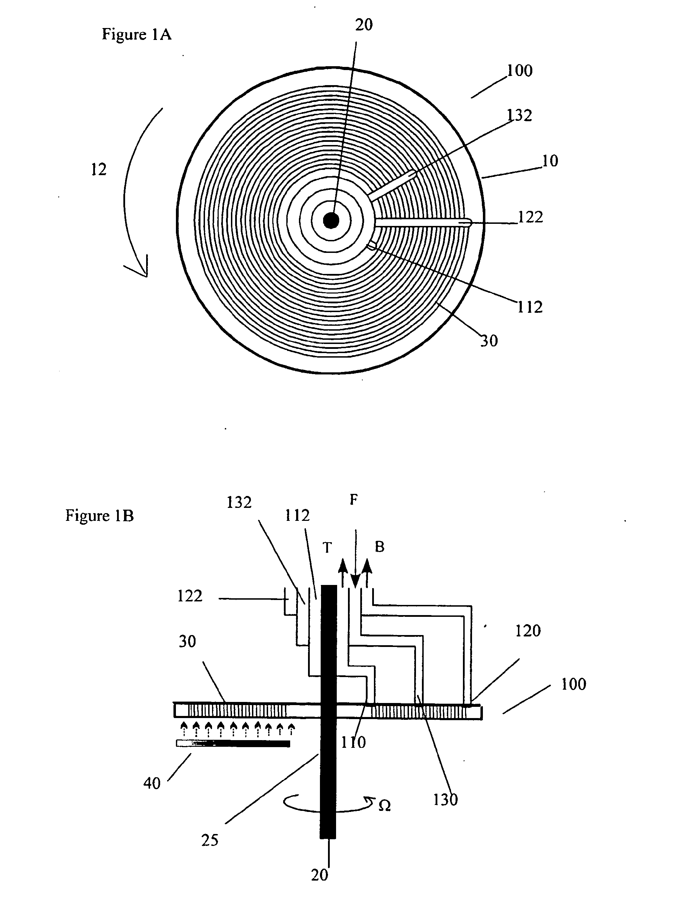

Figures 1A and 1B are respectively a schematic plan view and a schematic cross-sectional side view of a fluid-contactor 100 in accordance with a first embodiment of the present invention. The fluid-contactor 100 comprises a platform 10 arranged to rotate about a predetermined axis 20. In this embodiment, the platform 10 is in the shape of a disk, with the axis 20 extending through the radial centre of the disk i.e. the disk extends perpendicular to the rotational axis 20.

In this particular embodiment, a central axle 25 extends through the disk, allowing the disk to be rotated about the axis 20. In this particular embodiment, a motor (e.g. an electric motor) is mounted above or below the disk, so as to drive the central axle 25 so as to rotate the disk 10. However, it will be appreciated that alternative drive and housing designs could be utilised e.g. the disk could be arranged to rotate via a remote motor utilising gas jets or magnetic drives. The arrow 12 indicates the (anti-clockwise) rotation direction of the disk 10. The fluid-contactor 100 is spun with angular velocity $\Omega$.

In this particular embodiment, the disk diameter can be less than 10cm. Consequently, a relatively low power motor can be utilised typically to achieve fairly high rotational speeds (e.g. up to 6000 revolutions per minute). Further, due to the small size of the disk, the danger of internal material failure of the disk due to rotation is relatively low.

A channel 30 extends within the disk in a spiral path about the axis 20. The channel extends in a plane substantially perpendicular to the axis 20. The channel is of substantially uniform cross-section. The channel is substantially enclosed. The cross-section of the channel 30 is rectilinear, and approximately 300 microns wide (as measured along the radial direction of the disk), and 1000 microns deep (as measured parallel to the axis of rotation 20).

In this embodiment, the fluid-contactor 100 is arranged to perform distillation of a fluid mixture. The fluid mixture is distilled into first and second fluids corresponding to respectively high boiling point and low boiling point fractions of the fluid mixture. An aperture 110 is provided in the channel adjacent to the axis 20, for the output of the second fluid from the channel. This first aperture 110 is provided at (or toward) an end of the channel close to the axis 20, for removal of the second fluid from the channel (e.g. the vapour from the distillation). A second aperture 120 is provided distant from the axis 20, for removal of the first, high boiling point fluid. The second aperture 120 is provided at (or toward) the end of the channel 30 furthest from the axis 20. An inlet aperture 130 is provided in the channel 30, located between the two outlet apertures 110, 120. The inlet aperture 130 is for the input of the fluid mixture to the channel 30. As the disk spins about its axis, the resulting centrifugal force will drive a flow of fluid along the outer edge of the channel 30 towards the periphery of the disk, or "bottom" of the spiral.

Three tubes (112, 122, 132) are provided, each connected to a respective aperture (110, 120, 130). Each tube extends co-axially, relative to the rotational axis 20. The tubes are provided as conduits for the appropriate addition or removal of the fluid from the relevant aperture.

A temperature control unit 40 is provided to control the temperature within the channel. Typically, for distillation, the temperature control unit 40 will be a heater, arranged to heat at least a predetermined portion of the channel. The temperature control unit can take the form of a separate unit, heating and/or cooling the platform 10 via an adjacent surface, or alternatively can take the form of heating or cooling elements embedded within the platform 10 (preferably adjacent to the channel 30).

In use, the fluid mixture in the form of a liquid feed (F) is input to the channel 30 via tube 132 and aperture 130. The liquid feed is added at, or near to, its bubble (or boiling) point.

The disk 10 is rotated in direction 12 at an angular velocity such that the centrifugal acceleration causes liquid within the channel to move towards the end of the channel distant from the axis 20. The vapour is driven along the channel in the opposite direction, towards the first aperture 110 by an applied pressure gradient. This pressure gradient can be applied in a number of ways by any pressure gradient applying device, unit or means. For instance, the fluid contactor can be operated within a pressurised vessel. Alternatively, pressure may be applied directly to the outer periphery of the channel, so as to drive the vapour up the channel. However, in this preferred embodiment, the applied pressure is obtained by the boiling of the fluids towards the end of the channel furthest from the cenre (the distal end).

The temperature control unit 40 acts to heat the outer periphery of the channel 30, such that the end of the channel distant from the axis 20 acts as a liquid re-boiler.

The end of the channel distant from the axis 20 is analogous to the bottom of a conventional distiller, and bottom product (B) may be removed from the channel via aperture 120 either as vapour or as liquid discharged from the disk.

Vapour generated at the re-boiler flows counter-current to the liquid, along the inner edge of the channel, towards the centre of the disk, due to the pressure gradient maintained along the channel (the distal end of the channel being at the highest pressure). The inner-most or "top" part of the channel incorporates a condenser. Product (typically in the form of vapour) is removed from the channel 30 via aperture 110, and taken along outlet tube 112. This removed product may be permanently removed from the system, but preferably at least part of the vapour T is condensed and returned as reflux condensate added to fluid mixture F. The temperature distribution along the channel 30 is controlled by applied heating or cooling, as necessary.

In this distillation system, liquid is the fluid flowing towards the periphery, due to the spinning motion. Vapour flows back up the channel, due to the pressure generated when the liquid reaching the heating zone is boiled. Both the product streams may well, in most cases, be in the vapour phase, with the product from the outer aperture 120 being the component(s) with the higher boiling point(s). The component(s) with the lower boiling point will exit the channel at the other aperture 110.

For example, if the feed is a mixture of fluid 1 (boiling point 100°C) and fluid 2 (boiling point 70°C), the liquid and vapour streams flowing counter current are mixtures of fluid 1 and fluid 2 in various proportions. However, assuming the fluid contactor is correctly configured, it is possible to have substantially pure fluid 1 at aperture 120, and substantially pure fluid 2 at aperture 110 (in both the vapour and the liquid phases).

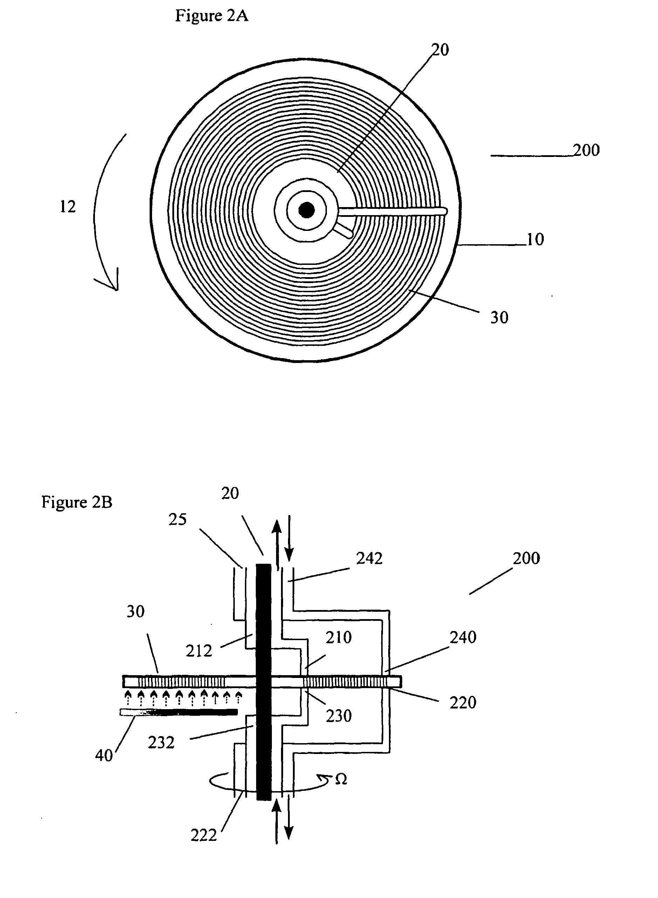

Figures 2A and 2B show respectively a plan view and a schematic cross-sectional side view of a fluid-contactor 200 in accordance with a second embodiment. Identical reference numerals are utilised to indicate similar features to those shown in Figures 1A and 1B.

The fluid-contactor 200 comprises a platform 10. A channel 30 extends in a spiral about a rotational axis 20.

In this particular embodiment, the fluid-contactor is used for absorption e.g. gas-liquid absorption. The fluid-contactor 200 thus comprises an inlet aperture 240 and an outlet aperture 210 for input and output of the gas to the channel. A corresponding inlet aperture 230 and outlet aperture 220 is provided for the liquid. The gas inlet aperture 240 and the liquid outlet aperture 220 are provided towards the end of the channel 30 distant from the rotational axis 20. Similarly, the liquid inlet aperture 230 and gas outlet aperture 210 are provided towards the inner-most end of the channel (i.e. the "top" of the spiral 30). In operation, the fluid-contactor spins around its axis in direction 12, with angular velocity Ω. Liquid entering the channel 30 from tube 232 via aperture 230 is driven along the outer edge of the channel 30 towards the periphery of the disk by centrifugal force, and exits the channel via aperture 220 to tube 222. Gas is fed from tube 240 through aperture 240 to the channel 30, and flows along the channel counter-current to the liquid, along the innermost edge of the channel to outlet aperture 210, where it exits the channel 30 to outlet tube 212. Gas-liquid absorption can thus occur between the two counterflowing fluids.

The tubes 212, 222, 232, 242 all extend co-axially for at least a portion of their length. The input tube 212 may be connected to recycle the gas back to the gas inlet tube, whilst the liquid outlet tube 222 may be connected to output the liquid from the fluid-contactor 200.

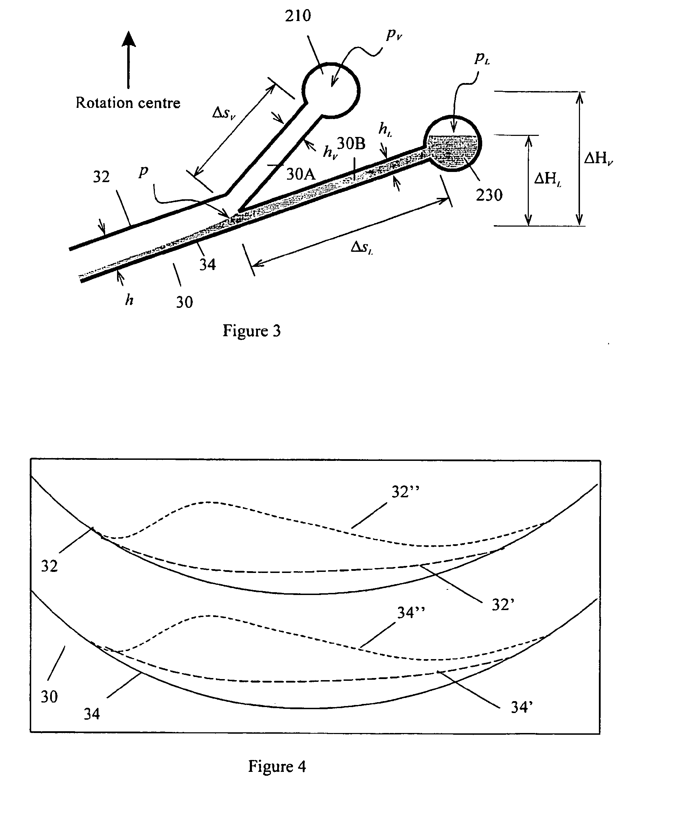

In a preferred embodiment, in order to assist with the separation of the input and output streams, each end of the channel is bifurcated. Figure 3 shows the bifurcated innermost end of a channel 30. The channel 30 divides into two branches 30A, 30B. Connected to each branch 30A, 30B of the channel is a separate aperture 210, 230. Separate branches are provided to facilitate the input and output of the different fluids, with each branch corresponding to a separate fluid inlet or outlet. For instance, the gas will flow along adjacent to the inner most wall 32 of the chamber, and will thus pass along the branch 30A to the outlet aperture 210. Correspondingly, liquid will normally flow along the outermost side or wall 34 of the chamber, and hence by providing branch 30B, the liquid can easily be input to the channel 30 via aperture 230.

A bifurcation, with each bifurcation corresponding to a separate fluid inlet or outlet, can be provided at either or both ends of the channel 30.

Distillation and gas-liquid absorption represent the key steps in many chemical processing systems. Embodiments of the present invention enable these processes to be undertaken on the micro-scale. This not only extends the scope of micro-chemical processing, but also offers the potential for specialist and novel separations, such as reactive, low pressure, multi-stage or low residence time operations (e.g. of particular value for strongly thermolabile pharmaceutical products). Furthermore, embodiments also may be used for other separation and contacting operations such as evaporation and extraction.

A key advantage of such systems is that the surface to volume ratio is much higher than in conventional size equipment. This offers significant potential advantage for processes dependent on the transport of heat or mass fluxes, both of which are key aspects of separation processes such as distillation. A significant disadvantage of micro-channel systems however, is the greatly increased relative importance of the surface energy acting at fluid-fluid and fluid-solid interfaces, which can dominate the fluid dynamics. Such forces are especially important in distillation, which typically requires liquid boiling, vapour condensation and the counter-flow of contacting liquid and vapour streams. On the usual industrial scale, gravity is normally sufficient to effect phase separations. However, on the micro-scale due to the surface energy effects, gravity is usually insufficient. The present invention utilises the effect of centrifugal acceleration to replace the effect of gravity and allow the enhanced transfer of mass and heat available at the micro-scale.

Conventional distillation is commonly continuous fractional separation, achieved by step-wise movement along the vapour-liquid equilibrium curve, with successive vaporisation and condensation of the vapour and liquid streams flowing counter-current through stages or trays in a column. Translating such a system to the micro-scale directly would require complicated design and control, especially of heat input. Successful operation of such a system, and in particular the hydrodynamics of such a system, is far from certain. An alternative mode of operation is that used in continuous contact equipment, where changes and concentration with height are continuous rather than step-wise. Conventionally, this is performed in packed bed streams, where a gas or vapour phase flows counter-current to a falling liquid phase distributed over the surface of a random arrangement of packing. The high interfacial area facilitates the mass flux required for the absorption or distillation process. This more basic "simple falling film" system is the basis for the micro-channel systems of the preferred embodiments, as it has the advantage of tractable and well defined hydrodynamics, with a continuous single stream of vapour flowing counter-current to a single continuous liquid stream. Conventionally, such falling film systems are of relatively low efficiency, with the instability of the liquid film at high liquid flow rates making them unattractive for industrial scale applications.

The above embodiments are provided by way of example only, and various alternatives will be apparent to the skilled person as falling within the scope of the present invention.

For instance, whilst the above examples typically utilise a gas (or vapour) and a liquid, it will be appreciated that the present invention can be applied to systems containing any two or more fluids. The term fluid is understood to include gases, liquids, suspensions of solids within gases or liquids, vapours, and other materials that lack definite shape and are capable of flowing and yielding at low pressure e.g. liquid crystals. It is envisaged that one of the fluids will be of greater density than the other fluid.

Equally, whilst the embodiments have been described in terms of first and second fluids as discrete components, it will be appreciated that the fluid-contactor is in fact a dynamic system, with the composition of the fluids continually changing, as the different fluids mix and/or separate. The performance of the embodiments has been described in terms of separate fluids so as to improve clarity. However, it will be appreciated that the fluid-contactor can be utilised to separate and/or mix such fluids, and so the composition of the fluids in the fluid-contactor may be dynamically changing. Consequently, when separate fluids are described, it will be appreciated that such fluids can incorporate a portion of the other fluid, and that in actual fact the compositions of the fluids will typically be dynamically changing as the fluids proceed along the channel.

In the above embodiments, the channel has been described as a spiral. A spiral can be described as a point moving along a path circling around a centre of pool, and gradually receding from it. Equally, a spiral can be defined as a plane curve not re-entrant, described by a point, called the generatrix, moving along a straight line according to a mathematical law, while the line is revolving about a fixed point of the pole.

It will be appreciated that the channel in accordance with the present invention can follow the path of any spiral. This includes the channel being an equiangular spiral (a logarithmic spiral, a plane curve which cuts all its generatrices at the same angle) or a spiral of archimedes (a spiral the law of which is that the generatrix moves uniformly along the revolving line, which also moves uniformly). The channel may extend in any of the aforementioned spirals. In most embodiments, it is preferable if the channel spiral generally extends in a plane substantially perpendicular to an axis through the pole. However, in some embodiments the channel, or portions of the channel, may extend along a path above and/or below the plane perpendicular to the pole axis.

Equally, the channel may not be shaped precisely as a spiral, but may extend generally in a spiral about the rotational axis. In all instances in which the channel does not follow a spiral, it is envisaged that the fluids travelling along the channel will continue to move due to the effect of the fluids effectively being pushed in and out of the non-spiral regions by fluids within adjacent spiral portions. Typically, such non-spiral portions will extend less than I rotation of the spiral (i.e. an arc less than 360°), and more preferably less than 1 quarter of a rotation around the spiral.

Further, whilst the preferred embodiments have a uniform cross-sectional area, it will be appreciated that both the shape and/or the size of the channel may vary along the length of the channel e.g. local regions may be wider than the rest of the channel.

For instance, Figure 4 illustrates a portion of the channel 30 i.e. a fraction of the total length of the channel, with the solid lines 32, 34 indicating the side walls of the spiral channel. Figure 4 shows a plan view. The dotted lines 32", 32' and 34', 34" illustrate alternate paths of respectively the inner side wall 32 and the outer side wall 34, falling within the scope of the present invention, in which portions of the channel side walls do not extend along the path of a spiral. Either or both of the side walls may deviate from the path of a spiral.

For instance, the path shown by the dotted line 34' is that in which the outer side wall partially follows the path of a circle i.e. the distance from the rotational axis remains fixed for a predetermined length of the channel, rather than receding from the rotational axis. Alternatively, as shown by the dotted line 34", the outer side wall may follow a path in which the distance between the side wall and the rotational axis temporarily decreases.

Equally, whilst in a preferred embodiments it is envisaged that the spiral extends in a plane substantially perpendicular to the rotational axis, it will be appreciated that local portions or regions of the channel may deviate from a spiral path by following a path that extends in a direction above and/or below the spiral path e.g. above or below the plane generally perpendicular to the axis.

Further, the channel cross-section can be any desired shape e.g. rectilinear, elliptical or circular, or any combination thereof.

The geometry of the spiral channel may change periodically along the channel. This can be used to promote fluid mixing in a stage-wise manner.

Equally, whilst in the preferred embodiments it is assumed that the internal surfaces of the channel are of uniform surface properties, it will be appreciated that internal surfaces of the channel may be formed of, or coated with different materials, or treated so as to have different surface properties. The manufacturing process of the rotating element may cause the walls of the channel to have different properties, or for the properties to change along the length of the wall(s). Such properties include, but are not limited to wettability, contact angle, adsorbtion characteristics, dielectric constant, or any other surface property.

For instance, to improve the separation of the two fluids within the channel, the innermost side of the channel may have a different wettability from that of the facing internal surface on the opposite side of the channel (i.e. the outermost side of the channel).

For instance, the innermost surface of the channel could be hydrophilic, with the outermost surface hydrophilic (if the more dense fluid is aqueous) or vice versa. Equally, the upper and lower surfaces of the channel may have different properties from each other, or from the side walls.

Whilst in the above embodiments it has been assumed that two fluids move along the channel counter currently i.e. in opposite directions, it is possible for the two fluids to actually move along the channel in the same direction. For instance, the two fluids could be two substantially immiscible liquids, with both liquids being driven to the outer periphery of the disk as the disk rotates e.g. for heat and/or mass transfer. Such a system would be advantageous in liquid-liquid extraction systems involving the partition of a sparingly soluble material contained in one phase into a better solvent represented by the second phase. It may also be used as a form of direct contact heat transfer device.

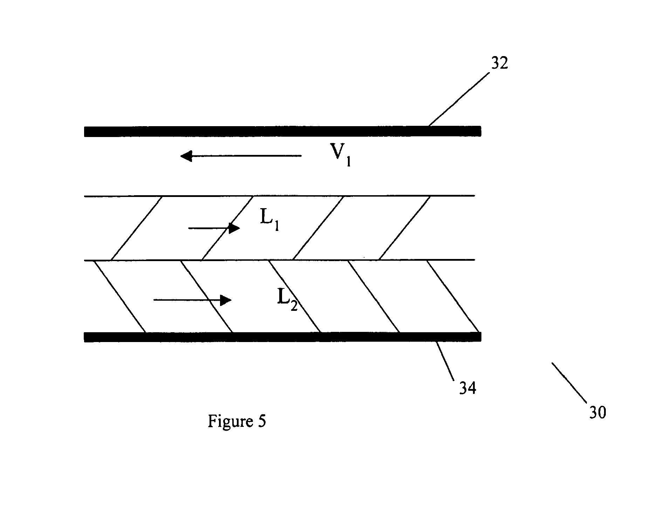

Similarly, it is possible for the fluid contactor to contain three or more separate fluid streams within the same channel. For instance, as shown in Figure 5, the channel 30 could contain a first fluid (vapour, $V_1$) being driven by an imposed pressure gradient towards the centre of the spiral, with two other fluid streams (e.g. immiscible liquids $L_1$, $L_2$ being driven towards the outer periphery of the spiral channel as the fluid contactor rotates. For instance, this may be useful for applications such as an azeotropic distillation.

If desired, flow-rates of any of the fluids into or out of the channel can be controlled, to achieve the desired performance of the fluid-contactor.

Whilst the above embodiments have described a spiral performing a single operation, it will be appreciated that the fluid contactor can in fact operate as a double system. The fluid contactor can effectively comprise a first spiral (having its own inputs and outputs) concated with a second spiral, having its own inputs and outputs i.e. the two spirals effectively being a single spiral, with respective inputs and outputs. Both spirals can act as distillation units, with the second distillation unit (i.e. spiral) taking feed from the first distillation unit.

Further, whilst the structure of the channel (e.g. size of the platform, channel width, height and direction) and operation (e.g. rotational speed and direction of rotation) of the fluid-contactor have been described above, it will be appreciated that any values are of by way of example only, and any dimensions or operational conditions falling within the scope of the claims may be utilised.

An analytical solution for the simultaneous flow of a vapour and a liquid in a rotating spiral gap (i.e. a channel) will now be described, for use in estimating the appropriate operating conditions form different vapours and liquids. The rotation is used to produce an extra body force to help maintain phase separation. This body force allows counter (as well as co-current) movement of the two phases, with liquid (the denser fluid) responding to it most effectively, and the vapour (the less dense fluid) responding most effectively to a pressure gradient. The rotation also brings Coriolis acceleration, which under some conditions may provide secondary transport flow in each phase.

The simplified case of a 2D planar channel with large spiral radius in relation to channel width is considered for the case of no interphase mass transfer. When the variation in vapour density along the channel is small, and the variation in temperature along the channel does not change the fluid properties significantly, an analytical solution is possible. This solution allows the identification of the major characteristics of flows in practical channel types.

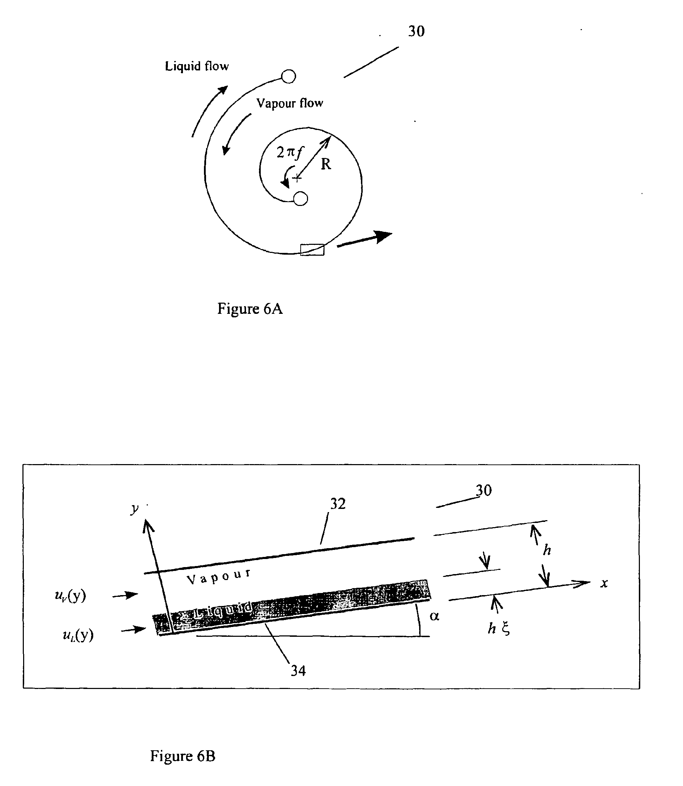

The geometry of the channel being considered in this particular model is shown in Figures 6A and 6B. The channel is assumed to be an equiangular spiral extending about a central pole, which is also the rotational axis. The channel rotates with constant angular velocity $\Omega$ (=2$\pi$f, where f is the rotational frequency). The distance from the central pole to any point on the channel is the radius $r$.

As shown in Figure 6B, the channel is of width h (in the radial direction), with the fractional width of the liquid phase being $h\xi$. The width across the channel is assumed to be in the y coordinate direction, with the channel extending in the x direction. The channel angle $\alpha$ is that between the local radial and spiral tangent directions.

The parameters affecting the flow are revealed when the solution is normalised using gap width, $h$, and the average velocity, $V_o$, and flow rate per unit depth, $Q_o$, for vapour flow alone with no rotation, given by:

$$V_o = -\frac{\beta h^2}{12\mu_V} \qquad [1] \qquad\qquad Q_o = -\frac{\beta h^3}{12\mu_V} \qquad [2]$$

where

$$\beta = \frac{dp}{dx}, \qquad [3]$$

i.e. the rate of change of pressure p with distance along the channel x. The vapour is assumed to be of viscosity $\mu_v$. The density ratio $\rho_r$ and viscosity ratio $\mu_r$ for the two phases are defined as:

$$\rho_r = \frac{\rho_V}{\rho_L} \qquad \mu_r = \frac{\mu_V}{\mu_L} \qquad [4]$$

where $\rho_v$ is the density of the vapour, $\rho_L$ the density of the liquid, $\mu_v$ the viscosity of the vapour and $\mu_L$ the viscosity of the liquid.

The analytical solution for the velocity profile can be expressed in terms of the liquid layer fraction $\xi$, for the liquid phase (y $\leq$ h$\xi$):

$$u_L^*\left(y^*\right) = \frac{6\mu_r y^*\left\{\left(1 + \rho_r \gamma^*\right)\left(1 - \xi\right)^2 + \left(1 + \gamma^*\right)\left[\xi(1 - \xi) + \left(\xi - y^*\right)\left(1 - (1 - \mu_r)\xi\right)\right]\right\}}{\left[1 - (1 - \mu_r)\xi\right]} \quad [5]$$

and for the vapour phase (y $\geq$ h $\xi$):

$$u_v^*\left(y^*\right) = \frac{6\left(1 - y^*\right)\left[\left[y^* - \xi - \xi(y^* - \xi)(1 - \mu_r)\right]\left(1 + \rho_r \gamma^*\right) + \mu_r\left[\left(1 + \rho_r \gamma^*\right)\xi(1 - \xi) + \left(1 + \gamma^*\right)\xi^2\right]\right\}}{\left[1 - (1 - \mu_r)\xi\right]}$$

$$[6]$$

The parameter $\gamma^*$ represents the relative importance of the rotational body force to pressure gradient force and is defined as:

$$\gamma^* = \frac{\rho_L R \Omega^2 \sin \alpha}{\beta} \qquad [7]$$

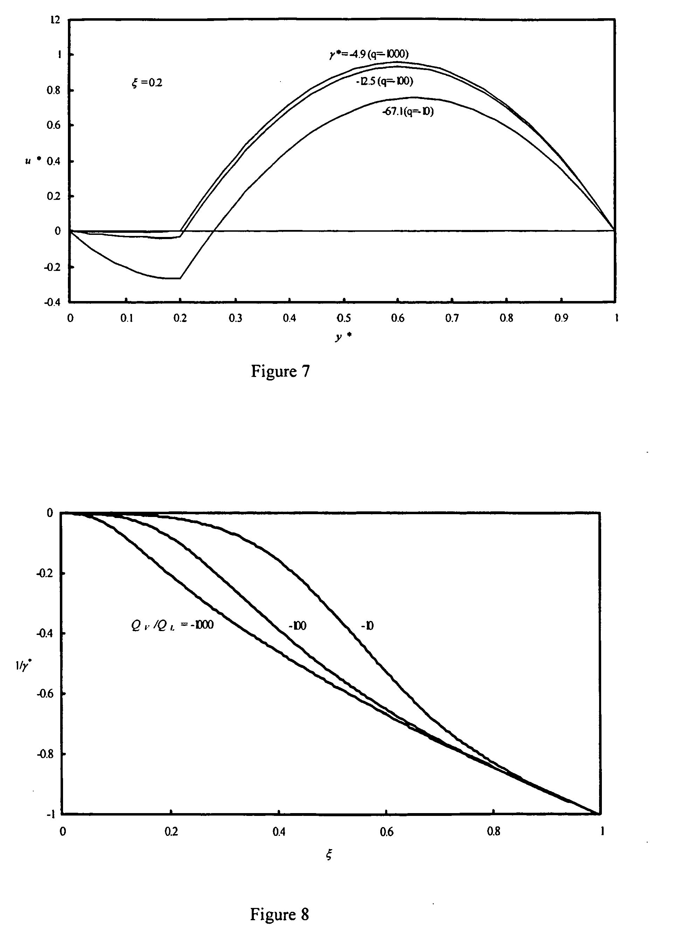

Figure 7 shows velocity profiles for the case of liquid occupying 20% of the channel gap, and for values of $\gamma^*$ corresponding to three different values of the vapour to liquid volume flow rate ratio

$$q = \frac{Q_V}{Q_L} \qquad [8]$$

where $Q_v$ is the vapour volume flow rate, and $Q_L$ is the liquid volume flow rate.

The values of q plotted cover the range characterising distillation and extraction processes. It will be noted that q is negative for counter flow of the two phases, as the signs of the two flow rates are then opposite. Property ratios corresponding to standard conditions for liquid water and air have been used, by way of example.

The above relationships for velocity can be integrated to give the following relations for the phase flow rates, again as a function of liquid layer fraction $\xi$, rotation parameter $\gamma^*$, and the property ratios:

$$Q_L^{\bullet} = \frac{3(1 + \rho_r \gamma^{\bullet})(1 - \xi)^2 + (1 + \gamma^{\bullet})\xi(4(1 - \xi) + \mu_r \xi)}{1 - (1 - \mu_r)\xi}$$ [9]

$$Q_V^{\bullet} = \frac{(1 - \xi^2)[3(1 + \gamma^{\bullet})\mu_r \xi^2 + (1 + \rho_r \gamma^{\bullet})(1 - \xi)(1 - \xi + 4\mu_r \xi)]}{1 - (1 - \mu_r)\xi}$$ [10]

To determine the pressure gradient that must be applied as a function of volume flow rate ratio, liquid layer fraction and liquid phase properties, in order to establish the feasibility of a given operation, the above relations are utilised with the definition for q used to eliminate the flow rates to produce the required relationship: .

$$\gamma^{\bullet} = \frac{-\{1 - 4(1 - \mu_r)\xi + 3(2 - \mu_r(3 + q))\xi^2 - 2(2 - \mu_r(3 + q))\xi^3 + (1 - \mu_r)(1 - \mu_r q)\xi^4\}}{\mu_r \xi^2[3 - 2(3 - 2q)\xi - (3 + (4 - \mu_r)q)\xi^2] - \rho_r(1 - \xi)^2[1 - 2(1 - 2\mu_r)\xi + (1 - \mu_r(4 + 3q))\xi^2]}$$

[11]

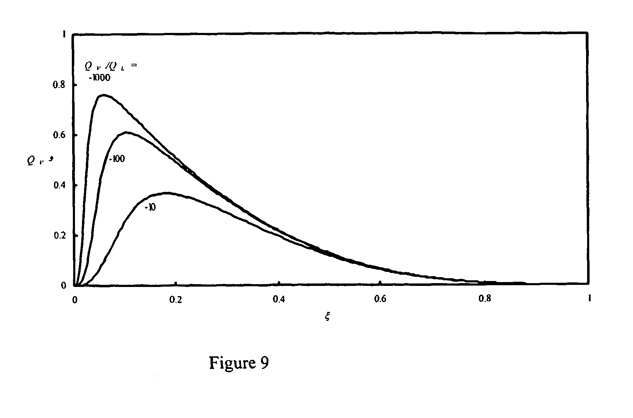

The inverse of $\gamma^*$, which is the non-dimensional pressure gradient, is plotted as a function of liquid layer thickness for the same three flow ratios in Figure 8. Figure 9 is a corresponding plot of vapour flow rate. Generally, for small liquid layer thickness the shear stress on the liquid at the outer wall of the channel greatly impedes the liquid flow, even for a large rotation rate. As the liquid layer increases, and the vapour passage is increasingly reduced, the magnitude of the pressure gradient must rise both as a result of the restriction of the passage and because the liquid velocity at the vapour interface "drags" the vapour back upstream.

There are two specific effects associated with this: more of the vapour is travelling in the wrong direction as the liquid layer increases, and the interface shear stress on the vapour increases. It will be seen that the beginning of the strong increase in pressure gradient begins at smaller liquid layer fraction for larger vapour to liquid flow rate ratio, as would be expected.

Values of pressure gradient needed for representative conditions of operation for the case of liquid water flow with air (standard conditions) are listed in Table 1, again for the three different flow rate ratios. In these calculations, flow in the spiral at a position where the radius is $r$ = 1.5 cm and spiral angle is 2° (or 1° in the case of the bottom section of the table) are used and with rotation rate 3000 rpm. The pressure gradient increases with liquid fraction and with magnitude of flow rate ratio. In all cases, it would appear that operation at below 10% of a bar pressure drop per metre of spiral (β) is easily achieved. In the extreme case shown, $q$ = -1000 and $\xi$ = 0.3 for a 2° spiral angle, the pressure drop per metre is 0.17 bar. The lower section of the table demonstrates that this can be reduced by use of a smaller spiral angle.

Producing a given liquid layer fraction depends on the flow resistances of flows of liquid and vapour at the inner end of the spiral. Here liquid enters the spiral and vapour leaves the spiral. If a single outlet is provided the vapour must escape as bubbles passing out through the incoming liquid. This situation would be difficult to analyse if not challenging to control. Thus, an arrangement which provides separated flow passages at the inner end of the spiral channel, such as that shown in Figure 3, is desirable. Application of the energy equation between the junction and the respective reservoir, assuming a planar channel, results in a constraint on the ratio of the resistances of the two channel passages given by

$$\frac{R_V}{R_L} = \frac{Q_L}{Q_V} + \frac{P_L - P_V + \gamma_L \Delta H_L - \gamma_V \Delta H_V}{R_L Q_V}$$ [12]

where

$$\gamma_V = \rho_V R \Omega^2 \sin \alpha \qquad \gamma_L = \rho_L R \Omega^2 \sin \alpha \qquad\qquad [13]$$

and the resistances are defined by

$$R_L = \frac{12\mu_L \Delta s_L}{h_L^3} \qquad [14] \quad \text{and} \quad R_V = \frac{12\mu_V \Delta s_V}{h_V^3} \qquad\qquad [15]$$

Thus, with flow rates dependent on liquid layer fraction, Equation 12 gives the required resistance ratio for a given liquid layer fraction and vapour and liquid reservoir heights and pressures, enabling the design of flow supply system using Equations 14 and 15. At the outer end of the spiral, the liquid and vapour do not interact strongly because the liquid 'empties' outwards and interaction between the phases can be made negligible.

Consider a 500 $\mu$m wide channel with a liquid film of thickness $\delta = 50$ $\mu$m ($\xi = 0.1$), $f = 100$ cps, $\alpha = 3$ degrees and R = 25 mm. In the absence of any gas flow, water will flow at an average liquid film velocity, $V_L = 0.43$ m/s with a Reynolds number (Re) = 20. For equal and opposite water and air mass flow rates, (typically representing distillation with full reflux), the liquid velocity falls to 0.25 m/s, with a gas pressure gradient of 25 kPa/m, which is relatively high and may cause operational problems. The pressure gradient can be reduced by decreasing liquid film thickness or channel angle, for example the gradient reduces to 3.3. kPa/m for a liquid film of 25 microns ($\xi = 0.05$, $V_L = 0.092$m/s), or 2.2 kPa/m by also reducing the angle to 2 degrees ($V_L = 0.061$m/s). Thus it is apparent how slight changes to the system geometry enable a practical system to be achieved. Note that there is of course a limit to the channel angle set by the total channel width, $h$, and separation, s, thus:

$$\tan \alpha_{min} \approx \frac{h+s}{2\pi R} \qquad\qquad [16]$$

Typically this angle can be made as small as around 0.5 degrees. Thus controlling the channel angle is an effective way of controlling the liquid film velocity.

**Table 1. Values of pressure gradient, vapour flow rate and vapour velocity.**

| $\alpha = 2°$ | | | |
|---|---|---|---|
| $q = -1000$ | | | |
| $\xi$ | $Q_v$ (m2/s) | $\beta$ (Pa/m) | $Q_v/h(1\text{-}\xi)$ (m/s) |
| | | | |
| 0.1 | $9.73 \times 10^{-6}$ | -2836 | 0.108 |
| 0.15 | $1.89 \times 10^{-5}$ | -6584 | 0.222 |
| 0.2 | $2.51 \times 10^{-5}$ | -10508 | 0.313 |
| 0.25 | $2.79 \times 10^{-5}$ | -14197 | 0.372 |
| 0.3 | $2.82 \times 10^{-5}$ | -17606 | 0.402 |
| $q = -100$ | | | |
| $\xi$ | $Q_v$ (m2/s) | $\beta$ (Pa/m) | $Q_v/h(1\text{-}\xi)$ (m/s) |
| 0.1 | $1.59 \times 10^{-6}$ | -440 | 0.018 |
| 0.15 | $4.77 \times 10^{-6}$ | -1684 | 0.056 |
| 0.2 | $9.41 \times 10^{-6}$ | -4012 | 0.118 |
| 0.25 | $1.43 \times 10^{-5}$ | -7376 | 0.190 |

(continued)

| q = - 100 | | | |
|---|---|---|---|
| $\xi$ | $Q_v$ (m²/s) | $\beta$ (Pa/m) | $Q_v$ /$h$(1-$\xi$) (m/s) |
| 0.3 | $1.80\times10^{-5}$ | -11420 | 0.257 |
| q =-10 | | | |
| $\xi$ | $Q_v$ (m²/s) | $\beta$ (Pa/m) | $Q_v$ /$h$(1-$\xi$) (m/s) |
| 0.1 | $1.70\times10^{-7}$ | -22 | 0.002 |
| 0.15 | $5.63\times10^{-7}$ | -220 | 0.007 |
| 0.2 | $1.30\times10^{-6}$ | -647 | 0.016 |
| 0.25 | $2.42\times10^{-6}$ | -1452 | 0.032 |
| 0.3 | $3.92\times10^{-6}$ | -2818 | 0.056 |
| $\alpha$= 1° | | | |
| q = - 1000 | | | |
| $\xi$ | $Q_v$ (m²/s) | $\beta$ (Pa/m) | $Q_v$ /$h$(1-$\xi$) (m/s) |
| 0.1 | $4.87\times10E-0^6$ | -1418 | 0.054 |
| 0.15 | $9.43\times10E-0^6$ | -3293 | 0.111 |
| 0.2 | $1.25\times10E-0^5$ | -5255 | 0.157 |
| 0.25 | $1.40\times10E-0^5$ | -7100 | 0.186 |
| 0.3 | $1.41\times10E-0^5$ | -8805 | 0.201 |

In practice channel angle and depth may vary along its length to accommodate the changing radius and location of feed or product connections. The flow equations also enable important stability criteria to be examined and satisfied, such as the change of liquid flow with film thickness.

The centrifugal forces acting to separate the vapour and liquid phases and to overcome interfacial forces are again dependent on the channel angle, but in this case the effective 'gravity' acceleration is R$(2\pi f)^2$ cos $\alpha$. Thus as the channel angle approaches zero these forces reach a maximum, and can then be further enhanced by increasing frequency. The magnitude of these forces can be estimated by considering the ratio of effective weight to surface force, thus:

$$\frac{\rho r (2\pi f)^2 \cos\alpha\, l^2}{\sigma}$$

[17]

Where $\sigma$ is the surface tension.

For the initial values used above, this indicates a balance of the forces at a critical length, *l*, of about 75 $\mu$m. The same ratio, but using $\Delta\rho$ is applicable to the vapour liquid disengagement during the boiling and condensation operations. Under these conditions 10 $\mu$m vapour bubbles would rise through a 50 $\mu$m layer in about 1 ms. More importantly, droplets attached to surfaces would become detached due to the centrifugal forces at a critical diameter of about 300 $\mu$m for the worst case of a 90 degree contact angle.

## Claims

1.  A fluid-contactor (100; 200) comprising an element (10) arranged to rotate about a predetermined axis (20), the element (10) comprising:

    a channel (30) extending generally in a spiral about said axis (20), the channel (30) having a first aperture (110;

210) for the output of a first fluid, a second aperture (120; 220) distant from said axis (20) for the output of a second fluid, and at least a third aperture (130; 230) for the input of a fluid to the channel (30); and
the fluid-contactor (100; 200) comprising a motor arranged to ratate the element (10) at an angular velocity sufficient to move second fluid within said channel (30) towards said second aperture (120; 220).

2. A fluid-contactor (100; 200) as claimed in claim 1, wherein said first aperture (110; 210) is adjacent said axis (20).

3. A fluid-contactor (100; 200) as claimed in claim 1 or claim 2, wherein said channel (30) extends in a plane substantially perpendiculaire to said axis (20).

4. A fluid-contactor (100; 200) as claimed in any one of the above claims, wherein said element (10) is a disc, with said predetermined axis (20) extending through the radial centre of the disc.

5. A fluid-contactor (100; 200) as claimed in any one of the above claims, wherein the channel angle ($\alpha$) varies along the length of the channel (30).

6. A fluid-contactor (100; 200) as claimed in claim 5, wherein the channel angle ($\alpha$) of at least one portion of said channel (30) varies such that the channel (30) does not follow the path of a spiral.

7. A fluid-contactor (100; 200) as claimed in any one of the above, claims, wherein the internal width (h) of the channel (30) varies along the length of the channel (30).

8. A fluid-contactor (100; 200) as claimed in any one of the above claims, wherein at least a portion of the channel (30) is bifurcated, the third aperture (130; 230) for input of a fluid being located on one arm (30B) of the bifurcation, and either the first (110; 210) or second aperture (120; 220) for respective output of the first or second fluid being located on a second arm (30A) of the bifurcation.

9. A fluid-contactor (100; 200) as claimed in any one of the above claims, wherein, in at least a portion of the channel (30), the wettability of an internal surface (32) adjacent said predetermined axis (20) is different from the wettability of the facing internal surface (34) on the opposite side of the channel (30).

10. A fluid-contactor (100; 200) as claimed in any one of the above claims, wherein the fluid-contactor (100; 200) further comprises a temperature control unit (40) arranged to maintain at least a predetermined portion of said channel (30) at a predetermined temperature.

11. A fluid-contactor (100; 200) as claimed in claim 10, wherein said temperature control unit (40) comprises a heater arranged to heat a predetermined portion of said channel (30).

12. A fluid-contactor (100) as claimed in any one of the above claims, wherein the third aperture (130) is located along the channel (30) between the first (110) and second apertures (120), for input of the fluid mixture into the channel (30), said first and second fluids corresponding to respectively low boiling point and high boiling point fractions of said fluid mixture.

13. A fluid-contactor (200) as claimed in any one of claims 1 to 11, wherein
the third aperture (230) is located adjacent the second aperture (220), for input of the first fluid to the channel, the channel further comprising a fourth aperture (240) adjacent the first aperture (210), for input of the second fluid to the channel (30).

14. A fluid-contactor as claimed in claim 1, wherein said first aperture is distant from said axis.

15. A fluid contactor as claimed in claim 14, wherein the fluid contactor is arranged for continuous co-current contacting, and wherein the third aperture is located adjacent said axis for the input of the first fluid to the channel, the channel further comprising a fourth aperture adjacent the axis, for input of the second fluid to the channel.

16. A fluid-contactor (100; 200) as claimed in any one of the above claims, wherein at least one of said apertures (110, 120, 130; 210, 220, 230, 240) is connected to a fluid container via a co-axially extending tube (112, 122, 132; 212, 222, 232, 242).

17. A method of manufacturing a fluid-contactor (100; 200) comprising:

providing an element (10) arranged to rotate about a predetermined axis (20);
creating a channel (30) in said element (10) extending generaly in a spiral about said axis (20), the channel (30) having at least a first apeture (110; 210) for the output of a first fluid, and at least a second aperture (120; 220) distant from said axis (20) for the output of a second, more dense; fluid; and
a motor arranged to rotate the element (10) at an angular velocity sufficient to move second fluid within said channel (30) towards said second aperture (120; 220).

18. A method of producing a substance which is obtained by a contacting process or a separating process, the method comprising:

providing an element (10) arranged to rotate about a predetermined axis (20), the element (10) comprising a channel (30) extending generally in a spiral about said axis (20), the channel (30) having at least a first aperture (110; 210) for the output of a first fluid, and at least a second aperture (120; 220) distant from said axis (20) for the output of a second, more dense, fluid;
the method comprising rotating the element (10) at an angular velocity sufficient to move second fluid within said channel (30) towards said second aperture (120; 220).

**Patentansprüche**

1. Fluidkontaktor (100,200) ein Element (10), das angepasst ist, um um eine vorbestimmte Achse (20) zu drehen, das Element (10) umfassend:

einen Kanal (30), der sich generell spiralenformig um die Achse (20) herum erstreckt, wobei der Kanal (30) eine erste Öffnung (110, 210) zum Auslassen eines ersten Fluids, eine zweite Öffnung (120, 220), die von der Achse (20) entfernt ist, zum Auslassen eines zweiten Fluids, und mindestens eine dritte Öffnung (130, 230) zum Einlassen, eines Fluids in den Kanal (30), und
einen Fluidkontaktor (100, 200), umfassend einen Motor, der angepasst ist, um das Element (10) mit einer Winkelgeschwindigkeit zu drehen, die ausreichend ist, um das zweite Fluid innerhalb des Kanals (30) in Richtung der zweiten Öffnung (120, 220) zu bewegen.

2. Fluidkontaktor (100, 200) nach Anspruch 1, wobei sich die erste Öffnung (110, 210) neben der Achse (20) befindet.

3. Fluidkontaktor (100, 200) nach Anspruch 1 oder 2, wobei sich der Kanal (30) in einer Ebene erstreckt, die im Wesentlichen senkrecht zur Achse (20) ist.

4. Fluidkontaktor (100, 200) nach irgendeinem der vorhergehenden Ansprüche, wobei das Element (10) eine Scheibe ist, wobei sich die vorbestimmte Achse (20) durch das radiale Zentrum der Scheibe erstreckt.

5. Fluidkontaktor (100, 200) nach irgendeinem der vorhergehenden Ansprüche, wobei der Kanalwinkel ($\alpha$) entlang der Länge des Kanals (30) variiert.

6. Fluidkontaktor (100, 200) nach Anspruch 5, wobei der Kanalwinkel ($\alpha$) von mindestens einem Abschnitt des Kanals (30) variiert, so dass der Kanal (30) nicht dem Pfad einer Spirale folgt.

7. Fluidkontaktor (100, 200) nach irgendeinem der vorhergehenden Ansprüche, wobei die innere Breite (h) des Kanals (30) entlang der Länge des Kanals (30) variiert.

8. Fluidkoncaktor (100. 200) nach irgendeinem der vorhergehenden Ansprüche, wobei mindestens ein Abschnitt des Kanals (30) gegabelt ist, wobei sich die dritte Öffnung (130, 230) zum Einlassen eines Fluids an einem Arm (30B) der Gabelung befinde, und sich entweder die erste (110, 210) oder zweite Öffnung (120, 220) zum jeweiligen Auslassen des ersten und zweiten Fluids an einem zweiten Arm (30A) der Gabelung befindet.

9. Fluidkontaktor (100, 200) nach irgendeinem der vorhergehenden Ansprüche, wobei, in mindestens einem Abschnitt des Kanals (30), die Benetzbarkeit einer inneren Oberfläche (32) neben der vorherbestimmten Achse (20) von der Benetzbarkeit der zugewandten inneren Oberfläche (34) auf der entgegengesatzten Seite des Kanals (30) verschieden ist.

**10.** Fluidkontaktor (100, 200) nach irgendeinem der vorhergehenden Ansprüche, wobei der Fluidkontaktor (100, 200) ferner eine Temperaturkontrolleinheit (40) umfasst, die angepasst ist, um mindestens einen vorbestimmten Abschnitt des Kanals (30) bei einer vorbestimmten Temperatur zu halten.

**11.** Fluidkontaktor (100, 200) nach Anspruch 10, wobei die Temperaturkontrolleinheit (40) eine Heizvorrichtung umfasst der angepasst ist, um einen vorbestimmten Abschnitt des Kanals (30) zu erhitzen.

**12.** Fluidkontaktor (100) nach irgendeinem der vorhergehenden Ansprüche, wobei sich die dritte Öffnung (130) entlang des Kanals (30) zwischen der ersten (110) und zweiten Öffnung (120) zum Einlassen des Fluidgemischs in den Kanal (30) befindet, wobei das erste und zweite Fluid jeweiligen niedrigen und hohen Siedepunktfraktionen des Fluidgemischs entspricht.

**13.** Fluidkontaktor (200) nach irgendeinem der Ansprüche 1 bis 11, wobei sich die dritte Öffnung (230) neben der zweiten Öffnung (220) befindet, zum Einlassen des ersten Fluids in den Kanals, wobei der Kanal ferner eine vierte Öffnung (240) neben der ersten Öffnung (210) zum Einlassen des zweiten Fluids in den Kanal (30) umfasst.

**14.** Fluidkontaktor nach Anspruch 1, wobei die erste Öffnung von der Achse entfernt ist.

**15.** Fluidkontaktor nach Anspruch 14, wobei der Fluidkontaktor zum kontinuierlichen Gleichstromkontakrieren angepasst ist, und wobei sich die dritte Öffnung neben der Achse zum Einlassen des ersten Fluids in den Kanal befindet, wobei der Kanal ferner eine vierte Öffnung neben der Achse umfasst, zum Einlassen des zweiten Fluids in den Kanal.

**16.** Fluidkontaktor (100, 200) nach irgendeinem der vorhergehenden Ansprüche, wobei mindestens eine der Öffnungen (110, 120, 130, 210, 220, 230, 240) mit einem Fluidbehälter durch ein sich koaxial erstreckendes Rohr (1112, 122, 132, 212, 222, 232, 242) erstreckt.

**17.** Verfahren zum Herstellen eines Fluidkontaktors (100, 200), umfassend:

Bereitstellen eines Elements (10), das angepasst ist, um sich um eine vorherbestimmte Achse (20) zu drehen; Gestalten eines Kanals (30) im Element (10), der sich generell spiralenförmig um die Achse (20) herum erstreckt, wobei der Kanal (30) mindestens eine erste Öffnung (110, 210) zum Auslassen eines ersten Fluids, und mindestens eine zweite Öffnung (120, 220), die von der Achse (20) entfernt ist, zum Auslassen eines zweiten dichteren Fluids; und einen Motor, der angepasst ist, um das Element (10) mit einer Winkelgeschwindigkeit zu drehen, die ausreichend ist, um das zweite Fluid innerhalb des Kanals (30) in Richtung der zweiten Öffnung (120, 220) zu bewegen.

**18.** Verfahren zum Erzeugen einer Substanz, die durch einen Kontaktvorgang oder einen Trennvorgang verhalten wird, das Verfahren umfassend:

Bereitstellen eines Elements (10), das angepasst ist, um sich um eine vorherbestimmte Achse (20) zu drehen, wobei das Element (10) einen Kanal (30) umfasst, der sich generell spiralenfömrig um die Achse (20) herum erstreckt, wobei der Kanal (30) mindestens eine erste Öffnung (110, 210) zum Auslassen eines ersten Fluids, und mindestens eine zweite Öffnung (120, 220), die von der Achse (20) entfernt ist, zum Auslassen eines zweiten dichteren Fluids; wobei das Verfahren das Drehen des Elements (10) mit einer Winkelgeschwindigkeit umfasst, die ausreichend ist, um das zweite Fluid innerhalb des Kanals (30) in Richtung der zweiten Öffnung (120, 220) zu bewegen.

**Revendications**

**1.** Contacteur de fluide (100 ; 200) comprenant un élément (10) configuré pour tourner autour d'un axe prédéterminé (20), l'élément (10) comprenant :

un canal (30) s'étendant généralement en une spirale autour dudit axe (20), canal (30) ayant une première ouverture (110. 210) pour la sortie d'un premier fluide, une deuxième ouverture (120; 220) distant dudit axe (20) pour la sortie d'un deuxième fluide, et au moins une troisième ouverture (130 ; 230) pour l'entrée d'un fluide dans le canal (30) et

le contacteur de fluide (100 ; 200) comprenant un moteur configuré pour tourner l'élément (10) à une vitesse angulaire suffisante pour déplacer le deuxième fluide dans ledit canal (30) vers ladite deuxième ouverture (120 ; 220).

**2.** Contacteur de fluide (100; 200) selon la revendication 1, dans lequel ladite première ouverture (110 ; 210) est adjacente audit axe (20).

**3.** Contacteur de fluide (100 ; 200) selon la revendication 1 ou 2, dans lequel ledit canal (30) s'étend dans un plan substantiellement perpendiculaire audit axe (20).

**4.** Contacteur de fluide (100; 200) selon l'une quelconque des revendications précédentes, dans lequel ledit élément (10) est un disque, ledit axe prédéterminé (20) s'étendant à travers le centre radial du disque.

**5.** Contacteur de fluide (100 ; 200) selon l'une quelconque des revendications précédentes, dans lequel l'angle de canal ($\alpha$) varie le long de la longueur du canal (30).

**6.** Contacteur de fluide (100 ; 200) selon la revendication 5, dans lequel l'angle de canal ($\alpha$) d'au moins une portion dudit canal (30) varie de telle façon que le canal (30) ne suit pas la voie d'une spirale.

**7.** Contacteur de fluide (100 ; 200) selon l'une quelconque des revendications précédentes, dans lequel la largeur interne (h) du canal (30) varie le long de la longueur du canal (30),

**8.** Contacteur de fluide (100 ; 200) selon l'une quelconque des revendications précédentes, dans lequel au moins une portion du canal (30) est bifurqué, la troisième ouverture (130 ; 230) pour l'entrée d'un liquide étant localisée sur un bras (30B) de la bifurcation, et la première (110 : 210) ou la deuxième (120; 220) ouverture pour la sortie respective du premier ou du deuxième fluide étant localisée sur un deuxième bras (30A) de la bifurcation.

**9.** Contacteur de fluide (100 ; 200) selon l'une quelconque des revendications précédentes, dans lequel dans au moins une portion du canal (30), la mouillabilité d'une surface interne (32) adjacent audit axe prédéterminé (20) est différente de la mouillabilité de la surface interne (34) faisant face sur la surface opposée du canal(30),

**10.** Contacteur de fluide (100 ; 200) selon l'une quelconque des revendications précédentes, dans lequel le contacteur de fluide (100 ; 200) comprend en outre une unité de contrôle de la température (40) configurée pour maintenir au moins une portion prédéterminée dudit canal (30) à une température prédéterminée

**11.** Contacteur de fluide (100 ; 200) selon la revendication 10, dans lequel ladite unité de contrôle de la température (40) comprend un appareil chauffant configuré pour chauffer une portion prédéterminée dudit canal (30).

**12.** Contacteur de fluide (100) selon l'une quelconque des revendications précédentes, dans lequel la troisième ouverture (130) est située le long du canal (30) entre les première (110) et deuxième (120) ouvertures (120) pour l'entrée du mélange de fluide dans le canal (30), lesdits premier et deuxième fluides correspnndant respectivement à des fractions de point d'ébullition faible et de point d'ébullition élevé dudit mélange de fluide.

**13.** Contacteur de fluide (200) selon l'une quelconque des revendications 1 à 11, dans lequel la troisième ouverture (230) est adjacente à la deuxième ouverture (220), pour l'entrée du premier fluide dans le canal, le canal comprenant en outre une quatrième ouverture (240) adjacente à la première ouverture (210) pour l'entrée du deuxième fluide dans le canal (30).

**14.** Contacteur de fluide selon la revendication 1, dans lequel la premier ouverture est distante dudit axe.

**15.** Contacteur de fluide selon la revendication 14, dans lequel le contacteur de fluide est configuré pour un contact continu co-courant, dans lequel la troisième ouverture est adjacents audit axe pour l'entrée du premier fluide dans le canal, le canal comprenant en outre une quatrième ouverture adjacente à l'axe, pour l'entrée du deuxième fluide dans le canal.

**16.** Contacteur de fluide (100; 200) selon l'une quelconque des revendications précédentes, dans lequel au moins une desdites ouvertures (110 ; 120 ; 130 ; 210 ; 220 ; 230 ; 240) est connectée à un réservoir de fluide par l'intermédiaire d'un tube (112, 122, 132, 212, 222, 232, 242) s'étendant coaxialement.

**17.** Procédé de fabrication d'un contacteur de fluide (100 ; 200), comprenant :

la fourniture d'un élément (10) configuré pour tourner autour d'un axe prédéterminé (20) ;
création d'un canal (30) dans ledit élément (10) s'étendant généralement en une spirale autour dudit axe (20),
le canal (30) ayant au moins une première ouverture (110 ; 210) pour la sortie d'un premier fluide, et au moins
une deuxième ouverture (120, 220) distante dudit axe (20) pour la sortie d'un deuxième fluide plus dense ; et
un moteur configuré pour tourner l'élément (10) à une vitesse angulaire suffisante pour déplacer le deuxième
fluide dans ledit canal (30) vers ladite deuxième ouverture (110 ; 220).

**18.** Procédé pour produire une substance obtenue par un procédé de contact ou de séparation, le procédé comprenant :

la fourniture d'un élément (10) configuré pour tourner autour d'un axe prédéterminé (20), l'élément (10) comprenant un canal (30) s'étendant généralement en spirale autour dudit axe (20), le canal (30) ayant au moins
une première ouverture (110 ; 210) pour la sortie d'un premier fluide, et au moins une deuxième ouverture
(120 ; 220) distante dudit axe (20) pour la sortie d'un deuxième fluide plus dense ;
le procédé comprenant la rotation de l'élément (10) à une vitesse angulaire suffisante pour déplacer le deuxième
fluide dans ledit canal (30) vers ladite deuxième ouverture (120 ; 220).

Figure 1A

Figure 1B

Figure 2A

Figure 2B

Figure 3

Figure 4

Figure 5

Figure 6A

Figure 6B

Figure 7

Figure 8

Figure 9

**EP 1 703 970 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6527432 B
- WO 9944736 A
- US 4292409 A
- US 4863567 A